# EUROPÄISCHE PATENTANMELDUNG

(11) **EP 0 770 775 A1**
(43) Veröffentlichungstag der Anmeldung: **02.05.1997**
(21) Anmeldenummer: 96116779.8
(22) Anmeldetag: 18.10.1996
(51) Int. Cl.: F02M 25/07, F16K 1/44

(54) **Ventil**

(30) Priorität: 26.10.1995 DE 19539921
(71) Anmelder: Ranco Incorporated of Delaware, Wilmington, Delaware 19801 (US)
(72) Erfinder: Klipfel, Bernhard, 76187 Karlsruhe (DE); Zeppei, Dieter, 76726 Germersheim (DE); Pelczyk, Alan Keith, 68766 Hockenheim (DE)
(74) Vertreter: Görg, Klaus, Dipl.-Ing.

(57) **Zusammenfassung**

Ein Ventil(1) weist ein Ventilgehäuse (2), einen Einlaß (3,4), einen Auslaß (5), zwei Ventilsitze (11,12) sowie zwei Ventilteller (9,10) auf. Dabei sind die Ventilteller (9,10) unabhängig voneinander schließbar, da ein Ventilteller (10) federnd an der gemeinsamen Ventilstange (8) angeordnet ist.

## Beschreibung

Die vorliegende Erfindung betrifft ein Ventil nach dem Oberbegriff des Patentanspruchs 1.

Derartige Ventile sind beispielsweise aus der US 2,865,164, der US 2,698,611 sowie aus der DE 23 18 481 C2 bekannt.

Bei der zuletzt genannten DE 23 18 481 C2 dient das darin beschriebene Ventil zur Abgasrückführung einer Brennkraftmaschine, wobei zwei Ventilteller starr an einer gemeinsamen Ventilstange angeordnet sind. Da der Einlaß einerseits zu der Oberseite des einen Ventiltellers und andererseits zu der Unterseite des anderen Ventiltellers geführt wird, öffnet ein Ventilteller mit der Strömungsrichtung des einströmenden Fluids, während der andere Ventilteller mit der Strömungsrichtung des einströmenden Fluids schließt. Durch diese zwei entgegengesetzt wirkenden Ventilteller mit zur Betätigungsrichtung senkrechten, ähnlichen Flächeninhalten wird der beim Öffnen bzw. Schließen des Ventils wirksame Differenzdruck stark verringert, was zu einer Verringerung der Betätigungskräfte und dadurch zu einer Verkleinerung der Betätigungseinrichtung führt. Im Gegensatz zu Abgasrückführungsventilen mit nur einem Ventilteller heben sich die entgegengerichteten Kräfte an den Ventiltellern auf. Demgegenüber fallen bei Ventilen mit nur einem Ventilteller die an der Ventilstange auftretenden Reaktionskräfte aufgrund des entstehenden Differenzdruckes mit größerer Ventilöffnung überproportional ab oder steigen mit kleiner werdender Ventilöffnung überproportional an.

Bei dem aus der DE 23 18 481 C2 bekannten Ventil, das zur Abgasrückführung eingesetzt wird, ist es zur Emissionsreduzierung von Schadgasen äußerst wichtig, unter allen Betriebsbedingungen eine minimale Leckrate des Ventiles zu erzielen. Da insbesondere bei heißen Abgasen thermisch bedingte Längenänderungen von charakteristischen Bauteilen auftreten können, sind bei dem bekannten Ventil nicht in sämtlichen Betriebszuständen Leckagen ausgeschlossen, da das Ventil nur in einem thermischen Zustand, sicher abdichten kann.

Der Erfindung liegt die Aufgabe zugrunde, ein insbesondere für die Abgasrückführung vorgesehenes Ventil dahingehend zu verbessern, daß unter allen Betriebsbedingungen ein sicheres und dichtes Schließen des Ventils gewährleistet ist, zugleich Fertigungstoleranzen ausgeglichen sein sollen, und die Geräuschbildung vermindert werden soll.

Diese Aufgabe wird erfindungsgemäß dadurch gelöst, daß die Durchströmungsöffnungen unabhängig voneinander schließbar sind.

Dadurch wird ein sicheres und dichtes Schließen unter allen Betriebsbedingungen gewährleistet, da die beiden Ventilteller bzw. die beiden Ventilsitze nicht starr aneinander gekoppelt sind. Gleichzeitig wird jedoch weiterhin der Einfluß unterschiedlicher Differenzdrücke auf die Stellkräfte und damit auf die Ventilposition bei konstanter Stellkraft verringert. Durch das erfindungsgemäße Entkoppeln beim Schließen der Durchströmungsöffnungen lassen sich die inhärenten thermischen Längenänderungen kompensieren und gleichzeitig wird eine vorteilhafte Stellcharakteristik auch bei hohen Differenzdrücken und geringen Ventilhüben geschaffen. Darüber hinaus können größere Fertigungstoleranzen selbsttätig ausgeglichen werden, was im Falle einer starren Koppelung der Ventilteller bzw. der Ventilsitze nicht möglich ist. Schließlich ist die Geräuschbildung bei dem erfindungsgemäßen Ventil zusätzlich verringert.

Vorteilhafte Ausführungsformen der Erfindung sind durch die Unteransprüche gekennzeichnet.

So kann das unabhängige Öffnen bzw. Schließen der Durchströmungsöffnungen nach vorteilhaften Ausbildungen der Erfindung entweder dadurch erfolgen, daß mindestens ein Ventilteller federnd mit einer Ventilstange verbunden ist, oder daß zumindest ein Ventilsitz federnd in dem Ventilgehäuse angeordnet ist. Auch lassen sich vorteilhaft diese beiden Varianten kombinieren, was zu einer noch besseren Steuerungscharakteristik des Ventils führt.

Sofern mindestens ein Ventilteller federnd mit einer Ventilstange verbunden ist, wird beim Schließen des Ventils zunächst ein Ventilteller dichtend an den zugehörigen Ventilsitz angedrückt, während jedoch die andere Durchströmungsöffnung noch nicht vollständig geschlossen ist. Durch ein Weiterbewegen der Ventilstange verringert sich die Durchströmungsöffnung des federnd angeordneten Ventiltellers, so daß schließlich auch diese verschlossen ist. Durch eine solche Ausführungsform ist ein selbsttätiger Längenausgleich geschaffen, der einerseits herstellungsbedingte Toleranzen vollständig kompensiert, wie sie insbesondere bei einer Großserienfertigung auftreten können, ohne daß jedoch die Dichtwirkung des Ventils beeinträchtigt wird. Andererseits werden etwaige auftretende thermische Längenänderungen kompensiert, da im geschlossenen Zustand beide Durchströmungsöffnungen fest verschlossen sind.

Nach einer weiteren Ausbildung der Erfindung können beide Ventilteller durch die Ventilstange miteinander verbunden sein. Hierdurch ist das Verstellen der Ventile mit lediglich einer Betätigungseinrichtung möglich. Da gleichzeitig eine Balance der auftretenden Gaskräfte erzielt wird, kann eine Betätigungseinrichtung verwendet werden, die eine geringere Stellkraft aufweist als eine Betätigungseinrichtung für lediglich einen Ventilteller.

Der spezifische Nachteil einer starren Verbindung beider Ventilteller, der zu einer Nichtkompensation der inhärenten thermischen Längenänderung sowie zu einer nicht vorteilhaften Stellcharakteristik bei hohen Differenzdrücken und geringen Ventilhüben führt, wird durch die elastische Anbindung des zweiten Ventiltellers vermieden.

Eine erfindungsgemäße Weiterbildung ist es, die Ventilstange als Teleskopventilstange auszubilden. Hierdurch kann auf einfache Weise eine elastische Anbindung des Ventiltellers an die Ventilstange erfolgen, wenn ein Federelement zwischen dem Oberteil der Teleskopventilstange und dem Teleskopfortsatz angeordnet ist. Dabei ist ein Ventilteller mit dem Teleskopfortsatz der Ventilstange fest verbunden. Hierdurch können Dichtungsprobleme vermieden werden.

Nach einer weiteren vorteilhaften Ausführungsform der Erfindung kann der Ventilteller über eine Membranfeder mit der Ventilstange federnd verbunden sein. Hierdurch wird auf einfache Weise das unabhängige Schließen der Durchströmungsöffnungen des Ventils ermöglicht, wobei die Ventilstange darüber hinaus einstückig ausgeführt werden kann, was den Fertigungsaufwand verringert.

Eine erfindungsgemäße Weiterbildung sieht zur Ventilverstellung eine Betätigungseinrichtung vor. Diese Betätigungseinrichtung kann als Schrittmotor mit Getriebe, als elektromagnetischer Steller, als vakuumbeaufschlagte, elastische Membran oder als Servomotor mit Getriebe ausgebildet sein. Über die Betätigungseinrichtung läßt sich die gewünschte Ventilcharakteristik einstellen.

Eine weitere vorteilhafte Ausführungsform ist dadurch gekennzeichnet, daß eine Feder zum Schließen des Ventils bei Ausfall der Betätigungseinrichtung vorgesehen ist. Durch diese Redundanz ist ein sicherer Betrieb auch bei Ausfall der Betätigungseinrichtung möglich.

Nach einer weiteren vorteilhaften Ausführungsform der Erfindung kann zumindest ein Ventilsitz federnd in dem Ventilgehäuse angeordnet sein. Durch diese Ausführungsform wird ebenfalls das voneinander unabhängige Verschließen bzw. Öffnen der Durchströmungsöffnungen ermöglicht. Darüber hinaus kann diese vorteilhafte Ausbildung auch zusätzlich zu einem federnd vorgesehenen Ventilteller bei dem Ventil vorgesehen sein. Beispielsweise kann ein Ventilteller federnd mit der Ventilstange verbunden sein, während der andere Ventilteller starr mit dieser Ventilstange verbunden ist, jedoch der zu diesem Ventilteller zugehörige Ventilsitz federnd in dem Ventilgehäuse angeordnet ist.

Durch das federnde Anordnen des Ventilsitzes in dem Ventilgehäuse sind relativ weite Fertigungstoleranzen möglich, und es kann der Bereich des Drosselhubs vergrößert werden. Zusätzlich wird durch diese Ausführungsform der Stoß bei einem schnellen Schließen des Ventils abgedämpft, so daß die Geräuschbildung deutlich verringert ist.

Nach einer weiteren Ausbildung der Erfindung kann der federnd in dem Ventilgehäuse angeordnete Ventilsitz durch eine membranartige Feder in dem Ventilgehäuse gelagert sein. Dies stellt konstruktiv einen geringen Aufwand dar, erzielt jedoch sehr gute Ergebnisse.

Durch einen als Sperrverzahnung ausgeführten Preßsitz zur festen Verbindung des Ventiltellers mit der Ventilstange können Montagetoleranzen eliminiert werden.

Schließlich ist eine weitere erfindungsgemäße Ausführungsform dadurch gekennzeichnet, daß eine elastische Membran als Ventilstangendichtung vorgesehen ist. Hierdurch wird bei geringem Verschleiß ein gute Dichtwirkung erzielt, da im Gegensatz zu beispielsweise einer Gleitdichtung auch bei schnellen und vielen Ventilhüben kein erhöhter Abrieb auftritt.

Nachfolgend wird rein beispielhaft eine vorteilhafte Ausführungsform der Erfindung anhand der beigefügten Zeichnungen beschrieben. Es zeigt:
- Fig. 1: einen schematischen Schnitt durch ein erfindungsgemäßes Ventil und
- Fig. 2: eine vergrößerte Darstellung des in Fig. 1 mit einem Kreis markierten Bereiches.

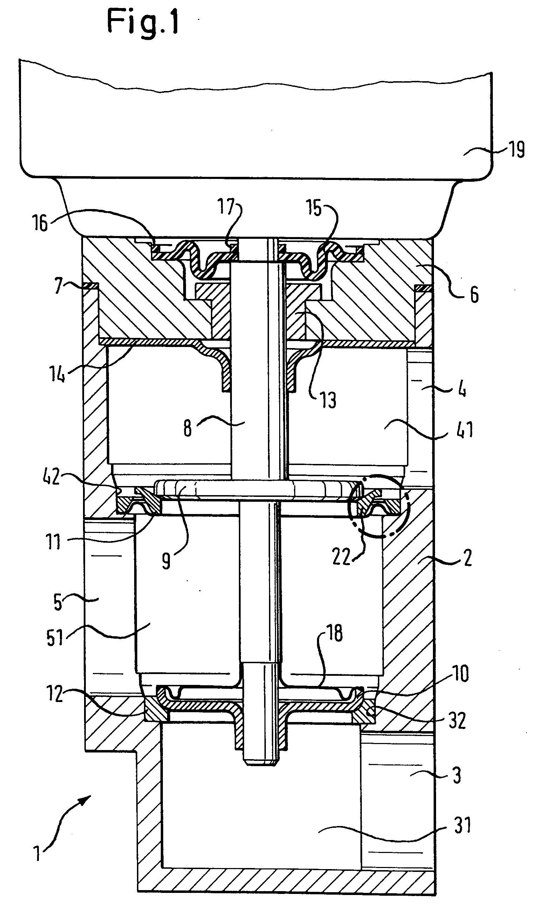

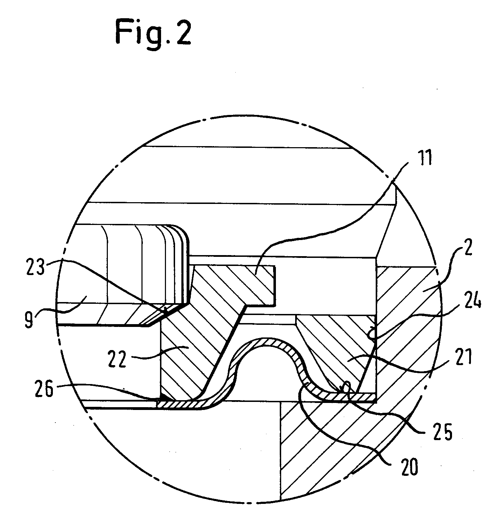

Fig. 1 zeigt eine erfindungsgemäße Ausführungsform eines Ventils 1, das ein Ventilgehäuse 2 mit einem Einlaß, bestehend aus Einlaßöffnungen 3 und 4, sowie einer dem Einlaß gegenüberliegenden Auslaßöffnung 5 aufweist. Dabei sind die Ein- und Auslaßöffnungen 3, 4, 5 durch horizontale Bohrungen in dem Gehäuse 2 gebildet. Eine sich an die Einlaßöffnung 3 anschließende Einlaßkammer 31 wird gegen eine vor der Auslaßöffnung 5 liegende Auslaßkammer 51 durch den Ventilteller 10 und den Ventilsitz 12 abgedichtet, die eine Durchströmungsöffnung bilden. Eine in Fig. 1 über der Einlaßkammer 31 liegende Einlaßkammer 41 wird gegen die Auslaßkammer 51 durch den Ventilteller 9 und den Ventilsitz 11 abgedichtet, wodurch ebenfalls eine Durchströmungsöffnung gebildet ist. Beide Ventilsitze 11 und 12 sind in vertikale Paßbohrungen 42 und 32 dichtend in das Ventilgehäuse 2 eingepaßt. Der Ventilsitz 11 ist als federnder Ventilsitz ausgeführt, wie unter Bezugnahme auf Fig.2 später näher beschrieben wird.

Die beiden Ventilteller 9 und 10 sind durch eine vertikal im Ventilgehäuse 2 angeordnete Ventilstange 8 miteinander verbunden und werden über diese Ventilstange gemeinsam betätigt. Dabei ist der Ventilteller 9, der die Einlaßkammer 41 gegen die Auslaßkammer 51 über den Ventilsitz 11 abdichtet, durch eine vielzahnige Verbindung mit der Ventilstange 8 starr verbunden (nicht dargestellt). Der Ventilteller 10, der die Einlaßöffnung 3 gegen die Auslaßöffnung 5 mit dem Ventilsitz 12 abdichtet, ist gleitend in einer Buchse der Ventilstange 8 geführt und fest mit einer Membranfeder 18 verbunden, die wiederum konzentrisch und fest mit der Ventilstange 8 verbunden ist. Hierbei sind die Verbindungen zwischen der Ventilstange 8, der Membranfeder 18 und dem Ventilteller 18 druckdicht ausgeführt.

Das Ventilgehäuse 2 ist an seiner Oberseite mit einer Öffnung versehen, die über ein Dichtelement 7 dicht mit einem Ventildeckel 6 verschlossen ist. In der Mitte des Deckels 6 befindet sich eine Bohrung, in der eine Gleitbuchse 13 zum Führen der Ventilstange 8 angeordnet ist. Oberhalb der Buchse 13, d.h. außerhalb des Einlasses befindet sich eine als elastische Membran ausgeführte Ventilstangendichtung 15, die das Ventil gegen die Umgebung abdichtet. Diese Dichtung 15 ist wiederum mit Dichtelementen 16 und 17 jeweils gegen den Ventilgehäusedeckel 6 und die Ventilstange 8 abgedichtet.

An der der Einlaßkammer 41 zugewandten Seite des Ventildeckels 6 befindet sich ein Hitzeschild 14, das die darüberliegenden Teile vor Überhitzung durch die zugeführten, heißen Abgase schützt. Die Ventilstange 8 ist dabei durch eine Gleitbuchse des Hitzeschildes geführt. Ferner ist in Fig. 1 oberhalb des Gehäusedeckels 6 der untere Teil einer Betätigungseinrichtung 19 für die Ventilstange 8 zu erkennen. In der vorliegenden Ausführungsform ist die Betätigungseinrichtung als elektromagnetischer Steller ausgebildet. Sie kann aber auch als Schrittmotor mit Getriebe, als Servomotor mit Getriebe oder als vakuumbeaufschlagte, elastische Membran ausgebildet sein. Des weiteren ist in der Betätigungseinrichtung eine Feder zum Schließen des Ventils bei Ausfall der Betätigungseinrichtung vorhanden (nicht dargestellt). Das heißt, die Betätigungseinrichtung ist redundant ausgelegt.

Fig. 2 zeigt einen vergrößerten Ausschnitt von Fig. 1, der den oberen, federnden Ventilsitz 11 genauer darstellt. Der eigentliche Ventilsitz 11 ist durch einen inneren Sitzring gebildet, der durch eine Schweißnaht 26 dichtend mit einer Membranfeder 20 verbunden ist. Die Membranfeder 20 wird wiederum von einem äußeren Sitzring 21 an einem Gehäusevorsprung geklemmt, wobei der Innendurchmesser des Sitzringes 21 größer als der Außendurchmesser des Ventilsitzes 11 ist. Der äußere Sitzring 21 wird über dessen Paßflächen 24, 25 metallisch gegen das Ventilgehäuse und die Membranfeder gedichtet. Der Ventilteller 9 berührt den Sitzring 22 an der konischen Berührfläche 23, wobei der Sitzring 22 durch die Membranfeder 20 elastisch gelagert ist. Dadurch kann bei Verschleiß oder bei hoher Toleranz zwischen Ventilteller und Sitzring der Ventilteller 9 so weit nach unten verfahren werden, bis das Ventil dicht geschlossen ist.

Nachfolgend wird die Funktionsweise des in den Figuren 1 und 2 beschriebenen Ventils erläutert.

Beim Schließen des Ventils durch Aktivieren der Betätigungseinrichtung 19 berührt zunächst der elastisch angekoppelte Ventilteller 10 den unteren, festen Ventilsitz 12, während die obere Durchströmungsöffnung durch den Ventilteller 9 noch geöffnet ist. Bewegt sich nun die Ventilstange 8 weiter abwärts, so gleitet sie durch die zentrische Buchse des auf dem Ventilsitz 12 aufsitzenden Ventiltellers 10, wobei die auf den Ventilteller 9 wirkende Druckkraft des einströmenden Angases durch die Federkraft der Membranfeder 18 kompensiert wird. Durch eine weitere Abwärtsbewegung der Ventilstange wird der Ventilteller 9 auf den federnden Ventilsitz 11 aufgesetzt, wodurch das Ventil vollständig geschlossen ist. Hierbei bewegt sich der Ventilsitz 11 noch etwas in Betätigungsrichtung, da dieser auf der Membranfeder 20 gelegert ist.

Beim Öffnen des Ventiles kehrt sich dieser Vorgang um, d.h. zuerst hebt der Ventilteller 9 von dem Ventilsitz 11 ab, während der Ventilteller 10 durch die Federkraft der Membranfeder 18 immer noch auf dem Ventilsitz 12 gehalten wird. Dabei gleitet die Ventilstange 8 so weit durch den Ventilteller 10, bis die Federspannung aufgehoben ist. Danach erfolgt die Mitnahme des Ventiltellers 12 durch die Ventilstange 8, bis beide Durchströmungsöffnungen zwischen den Einlaßöffnungen 3, 4 und der Auslaßöffnung 5 geöffnet sind. Durch diesen fein dosierbaren Öffnungs- und Schließvorgang kann die Durchflußcharakteristik des Ventils optimiert werden. Dies bedeutet, daß, um auch bei hohen Druckdifferenzen ein gutes Regelverhalten zu erreichen, eine stufenweise Öffnungscharakteristik eingestellt werden kann. Das Ventil führt also einen Drosselhub durch. Durch den federnden Ventilsitz 11 wird dabei der Bereich des Drosselhubes vergrößert. Außerdem wird dadurch der Stoß beim schnellen Schließen des Ventils aufgefangen, so daß die Geräuschbildung vermindert wird. Auch sind durch den federnden Ventilsitz 11 größere Montagetoleranzen möglich.

Das Hitzeschild 14 schützt die über ihm liegenden Teile, wie die Buchse 13, die Membrandichtung 15 sowie die Betätigungseinrichtung 19 vor der Strahlungswärme und vor Partikelablagerungen. Durch die Anordnung der Ventilteller 9, und 10, derart, daß immer ein Ventilteller in Abgasströmungsrichtung öffnet, während der andere Ventilteller gegen die Abgasströmungsrichtung öffnet und ein Ventilteller mit Angasströmungsrichtung schließt, während der andere Ventilteller gegen die Abgasströmungsrichtung schließt, und durch eine entsprechende Auswahl der Ventiltellerdurchmesser im Verhältnis zueinander, werden die auf die Ventilteller wirkenden Druckkräfte ausbalanciert, wodurch die erforderlichen Stellkräfte minimiert werden. Selbst bei Aufliegen des Ventiltellers 10 auf dem Ventilsitz 12 führt die Wirkung der Membranfeder 18 dazu, daß der auf den Ventilteller 9 wirkende Abgasdruck kompensiert wird. Außerdem wird durch die federnde Anbindung des Ventiltellers 10 an die Ventilstange 8 ein Ausgleich der thermischen Längenänderung ermöglicht, wodurch die Ventilteller 9 und 10 in jedem Betriebszustand optimal dichten.

## Patentansprüche

1. Ventil (1), insbesondere zur Abgasrückführung, mit
- einem Ventilgehäuse (2),
- einem Einlaß (3, 4),
- einem Auslaß (5),
- mindestens zwei verschließbaren
Durchströmungsöffnungen zwischen Einlaß (3,4) und Auslaß (5), die jeweils zwischen einem Ventilsitz (11, 12) und einem Ventilteller (9, 10) gebildet sind,
**dadurch gekennzeichnet, daß**
die Durchströmungsöffnungen unabhängig voneinander schließbar sind.

2. Ventil nach Anspruch 1,
**dadurch gekennzeichnet, daß**
mindestens ein Ventilteller (10) federnd mit einer Ventilstange (8) verbunden ist.

3. Ventil nach Anspruch 2,
**dadurch gekennzeichnet, daß**
beide Ventilteller (9, 10) durch die Ventilstange (8) miteinander verbunden sind.

4. Ventil nach einem der Ansprüche 2 oder 3,
**dadurch gekennzeichnet, daß**
die Ventilstange (8) als Teleskopventilstange ausgebildet ist.

5. Ventil nach einem der Ansprüche 2 oder 3,
**dadurch gekennzeichnet, daß**
die Verbindung des Ventiltellers (10) mit der Ventilstange (8) über eine Membranfeder (18) erfolgt.

6. Ventil nach einem der Ansprüche 1 bis 5,
**dadurch gekennzeichnet, daß**
zur Ventilverstellung eine Betätigungseinrichtung (19) vorgesehen ist.

7. Ventil nach einem der Ansprüche 1 bis 6,
**dadurch gekennzeichnet, daß**
eine Feder zum Schließen des Ventils (1) bei Ausfall der Betätigungseinrichtung (19) vorgesehen ist.

8. Ventil nach einem der Ansprüche 1 bis 7,
**dadurch gekennzeichnet, daß**
zumindest ein Ventilsitz (11) federnd in dem Ventilgehäuse (2) angeordnet ist.

9. Ventil nach Anspruch 8,
**dadurch gekennzeichnet, daß**
der Ventilsitz (11) durch eine membranartige Feder (20) in dem Ventilgehäuse (2) gelagert ist.

10. Ventil nach einem der Ansprüche 1 bis 9,
**dadurch gekennzeichnet, daß**
eine geschränkte, vielzahnige Verbindung zum Fügen eines Ventiltellers (9) an die Ventilstange (8) vorgesehen ist.

11. Ventil nach einem der Ansprüche 2 bis 10,
**dadurch gekennzeichnet, daß**
eine elastische Membran (15) als Ventilstangendichtung vorgesehen ist.
